# EUROPÄISCHE PATENTANMELDUNG

(11) **EP 1 557 689 A1**
(43) Veröffentlichungstag der Anmeldung: **27.07.2005**
(21) Anmeldenummer: 05100117.0
(22) Anmeldetag: 11.01.2005
(51) Int. Cl.: G01S 5/14, G01S 1/00

(54) **Empfänger für den Empfang von satellitengestützten Navigationssignalen, sowie Navigationssystem**

(30) Priorität: 24.01.2004 DE 202004001092 U; 17.03.2004 DE 102004013377
(71) Anmelder: Global Navigation Systems GNS-GmbH, 51379 Leverkusen (DE)
(72) Erfinder: Bierwisch, Bernd, 52076 Aachen (DE); Skaliks, Peter, 52146 Würselen (DE); Scheufen, Peter, 20255 Hamburg (DE); Guth, Andreas, 40474 Düsseldorf (DE)
(74) Vertreter: Dallmeyer, Georg, Dipl.-Ing.

(57) **Zusammenfassung**

Bei einem Empfänger (1) für den Empfang von satellitengestützten Navigationssignalen, mit einer Empfangseinheit (3), mit einer mit der Empfangseinheit (3) verbundenen Rechnereinheit (9) zur Verarbeitung und Weiterleitung von Signalen und Daten für die Navigation und mit einer Schnittstelle (7) zur Verbindung des Empfängers (1) mit einem Navigationsrechner, ist vorgesehen, dass mindestens eine Schnittstelle (2) zum Einsetzen von Steckmodulen (4,5,6) unterschiedlicher Funktionen an der Rechnereinheit (9) angeschlossen ist.

## Beschreibung

Die Erfindung betrifft einen Empfänger für den Empfang von satellitengestützten Navigationssignalen nach dem Oberbegriff des Anspruchs 1, sowie ein Navigationssystem nach Anspruch 10.

Empfänger für den Empfang von satellitengestützten Navigationssignalen sind bereits hinlänglich bekannt. Derartige Empfänger umfassen eine Empfangseinheit zum Empfang der von Satelliten ausgestrahlten Navigationssignalen, wobei die Empfangseinheit mit einer Rechnereinheit zur Verarbeitung und Weiterleitung dieser Signale und Daten für die Navigation verbunden ist. Der Empfänger ist über eine Schnittstelle mit einem Navigationsrechner, beispielsweise einem tragbaren, insbesondere einen Handheld-Computer, verbindbar.

Es ist ferner bekannt, dass die Empfangseinheit neben dem Empfang von satellitengestützten Navigationssignalen auch digitale Verkehrsinformationen empfängt.

Nachteilig bei dieser Art von Empfängern ist, dass, um eine alternative oder neue Technik, beispielsweise zur Verbindung des Empfängers mit dem Navigationsrechner, nutzen zu können, stets ein neuer Empfänger angeschlossen werden muss. Auch besteht keine Normung der Verbindungsstecker zu den Navigationsrechnern, so dass ein Nutzer bei dem Kauf eines neuen Navigationsrechners stets zusätzlich einen neuen Empfänger kaufen muss.

Es ist daher die Aufgabe der vorliegenden Erfindung, einen Empfänger der eingangs genannten Art derart weiterzubilden, dass eine Anpassung an neue Aufgaben oder Funktionen des Empfängers auf eine einfache Art und Weise möglich ist.

Zur Lösung dieser Aufgabe dienen die Merkmale des Anspruchs 1 bzw. 10.

Die Schnittstelle zum Einsetzen von Steckmodulen unterschiedlicher Funktionen ermöglicht es, auf einfache Art und Weise den Empfänger nachzurüsten und an eine neue Aufgabe oder gewünschte Funktion oder an unterschiedliche Navigationsrechner anzupassen. Bei der Verwendung von Steckmodulen ist es möglich, die Funktionserweiterung komplett in den Empfänger zu integrieren, so dass dieser räumlich nicht vergrößert wird. Ein den Navigationsrechner und den Empfänger umfassendes Navigationssystem ist somit individuell gestaltbar.

In einer bevorzugten Ausführungsform ist vorgesehen, dass ein Steckmodul eine Funk-Sende/Empfangseinheit, vorzugsweise zur drahtlosen Verbindung mit dem Navigationsrechner, ist. Dadurch ist es möglich, nachträglich eine drahtlose Verbindung, beispielsweise eine Bluetooth-Verbindung, mit dem Navigationsrechner herzustellen bzw. nachzurüsten. Es ist aber auch möglich, eine Mobilfunk-Sende/Empfangseinheit als Steckmodul an den Empfänger anzuschließen, so dass eine Funkverbindung zu einem Sender/Empfänger außerhalb des Navigationssystems über den Empfänger möglich ist, um beispielsweise einen Notruf abzusenden oder um Mehrwertdienste zu nutzen.

Die Verbindung des Empfängers mit dem Navigationsrechner kann grundsätzlich auch über eine lösbare Kabelverbindung erfolgen. Durch die lösbare Kabelverbindung ist es möglich, zunächst den Navigationsrechner mit dem Empfänger über diese Kabelverbindung zu verbinden, jedoch später oder alternativ eine drahtlose Verbindung, wie oben beschrieben, zwischen Empfänger und Navigationsrechner anstelle der Kabelverbindung vorzusehen.

In einer weiteren Ausführungsform ist vorgesehen, dass ein Steckmodul ein Verkehrinformationsempfänger ist. Falls beispielsweise die Navigationssoftware auf dem Navigationsrechner für die Verarbeitung der digitalen Verkehrsinformationen nicht ausgelegt ist, kann der Nutzer zunächst den Navigationsrechner und den Empfänger ohne Verkehrsinformationsempfänger benutzen. Bei einem Update der Software kann dann ohne Austausch des Empfängers ein Verkehrsinformationsempfänger nachgerüstet werden. Ein solcher Verkehrsinformationsempfänger ermöglicht eine dynamische Anpassung der Navigation an aktuelle Verkehrsverhältnisse.

In einer vorteilhaften Weiterbildung der Erfindung ist vorgesehen, dass ein Steckmodul eine autarke Stromversorgungseinheit, vorzugsweise eine Batterie ist. Dadurch ist es möglich, dass der Empfänger unabhängig von einem Stromversorgungskabel funktioniert, und dass bei langem Gebrauch auf eine einfache Art und Weise die Stromversorgungseinheit ausgetauscht werden kann. Auch ist es möglich, zunächst bei einer Verwendung mit einer Kabelverbindung auf eine zusätzliche Stromversorgungseinheit zu verzichten und bei einer späteren drahtlosen Benutzung eine Stromversorgungseinheit auf eine einfache Art und Weise nachzurüsten.

Es kann vorgesehen sein, dass das Steckmodul einen Schallwandler, vorzugsweise zur Sprachwiedergabe, beinhaltet. Auf diese Weise ist es möglich, alternativ oder zusätzlich zu der Sprachausgabe des Navigationsrechners auch an dem Empfänger eine Sprachausgabe zu ermöglichen. Es ist auch möglich, den Schallwandler in Form eines Mikrofons auszugestalten, so dass eine Sprachsteuerung des Navigationssystems über den Empfänger möglich ist.

In einer weiteren Ausführungsform ist vorgesehen, dass ein Steckmodul ein Display aufweist. Dadurch kann ein Display an dem Empfänger nachgerüstet werden, das entweder alternativ zu einem Display des Navigationsrechners benutzt werden kann, oder generell als Display des Navigationsrechners dient. Das Display kann sich bei dieser Ausführungsform als seitliches Anbauteil an dem Empfänger befinden.

Bei einer Weiterbildung ist vorgesehen, dass die Schnittstellen universelle Schnittstellen sind. Dadurch wird gewährleistet, dass die Zahl der Schnittstellen geringer sein kann als die Zahl der insgesamt angebotenen Steckmodule. Auch kann der Benutzer die Steckmodule beliebig variieren und somit den Empfänger frei nach seinen Wünschen konfigurieren.

Die Steckmodule können bei gleichartigen universellen Schnittstellen in jeder der Schnittstellen eingesetzt werden. Allerdings müssen die Schnittstellen für unterschiedliche Steckmodule nicht gleichartig sein und können unterschiedliche Aufnahmebuchsen aufweisen.

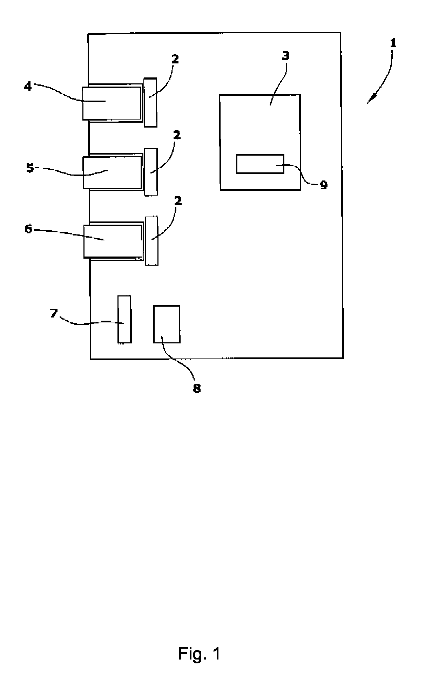

Im folgenden wird unter Bezugnahme auf die Zeichnung die Erfindung näher erläutert:

Die einzige Figur zeigt einen schematischen Aufbau eines erfindungsgemäßen Empfängers.

In der Figur ist ein Empfänger 1 für den Empfang von satellitengestützten Navigationssignalen dargestellt. In dem Empfänger 1 ist eine Empfangseinheit 3 integriert, die die von den Navigationssatelliten, beispielsweise die Satelliten des GPS-Systems, ausgestrahlten Navigationssignale empfängt. Mit der Empfangseinheit 3 ist eine Rechnereinheit 9 verbunden. Die von der Empfangseinheit 3 empfangenen Navigationssignale werden an die Rechnereinheit 9 zur Verarbeitung weitergegeben. Über eine Schnittstelle 7 kann der Empfänger 1 mit einem nicht dargestellten Navigationsrechner verbunden werden. Die Rechnereinheit 9 leitet die empfangenen Satellitensignale über die Schnittstelle 7 an den Navigationsrechner. Die Verbindungen zwischen der Rechnereinheit 9 und sämtlichen Schnittstellen ist der übersichtshalber nicht dargestellt. Der Empfänger 1 weist ferner Schnittstellen 2 zum Einsetzen von Steckmodulen 4,5,6 auf, an die Steckmodule 4,5,6 mit unterschiedlichen Funktionen anschließbar sind. Dabei können die Steckmodule 4,5,6 entweder voll im Empfängergehäuse integriert sein, oder auch teilweise aus dem Empfänger herausragen. Die Steckmodule 4,5,6 können beispielsweise eine Funk-Sende/Empfangseinheit umfassen, mit der der Empfänger 1 mit dem Navigationsrechner über eine drahtlose Verbindung anstelle einer Kabelverbindung über die Schnittstelle 7 verbindbar ist. Bei dieser Ausführungsform werden Signale und Daten für die Navigation von der Rechnereinheit 9 über eine Schnittstelle 2 und dem Steckmodul 4 mit Funksendern der Empfangseinheit and den Navigationsrechner weitergeleitet.

Zusätzlich oder alternativ kann die Funk-Sende/Empfangseinheit auch eine Modulfunkeinheit, beispielsweise in GPRS- oder UMTS-Standard, sein, mit der das Navigationssystem auch nach außen verbindbar ist, um beispielsweise Notrufe mit genauer Positionsansage zu senden oder sogenannte Mehrwertdienste, wie beispielsweise aktuelle Wetterdienste, Veranstaltungsdienste oder ähnlichen, zu nutzen.

Zusätzlich oder alternativ kann ein Steckmodul 4,5,6 einen Verkehrsinformationsempfänger beinhalten. Dieser Verkehrsinformationsempfänger empfängt digitale Verkehrsinformationsdaten, beispielsweise über einen Traffic-Message-Channel (TMC), und leitet diese über die Schnittstelle 2 an die Rechnereinheit 9. Die Rechnereinheit 9 verarbeitet diese Daten und überträgt sie über eine Schnittstelle 2 per Funk oder über die Schnittstelle 7 per Kabel an den Navigationsrechner. Dadurch können bei der Navigationsberechnung im Navigationsrechner aktuelle Verkehrsdaten für die dynamischen Routenberechnung berücksichtigt werden.

Auch ist es möglich, dass das Steckmodul 4,5,6 eine autarke Stromversorgungseinheit wie beispielsweise eine Batterie aufweist. Bei einer drahtlosen Benutzung des Empfängers 1 kann dadurch auf ein Stromversorgungskabel verzichtet werden. Auch ist es möglich, auf eine schnelle Art und Weise die Stromversorgungseinheit als Batterie oder Akkumulator auszutauschen. Eine zusätzliche externe Stromversorgung, beispielsweise über ein Kabel an den Anschluss 8, kann den Empfänger 1 zusätzlich oder alternativ mit dem benötigten Strom versorgen. Es ist des weiteren möglich, über diesen Anschluss 8 ein Steckmodul 4,5,6 mit der Stromversorgungseinheit aufzuladen. Dadurch wird eine zuverlässige Energieversorgung des Empfängers 1 gewährleistet.

Ferner ist es möglich, dass ein Steckmodul beispielsweise einen Schallwandler beinhaltet, der in Form eines einfachen Lautsprechers und/oder eines Mikrofons gestaltet sein kann. Die Navigationsanweisungen des Navigationsrechners können über diesen Lautsprecher ausgegeben werden. Liegt der Schallwandler in Form eines Mikrofons vor, kann eine Sprachsteuerung des Navigationssystems über dieses Mikrofon erfolgen.

Das Steckmodul 4,5,6 kann ein Display aufweisen, über das die Navigationsanweisungen ausgegeben wird. Ein solches Display kann alternativ oder zusätzlich zu dem Display des Navigationsrechners benutzt werden. Es können daher auch Rechner ohne oder mit sehr kleinem Display als Navigationsrechner eingesetzt werden, da in diesem Fall das Steckmodul 4,5,6 mit Display eine Anzeige der Navigationsanweisungen oder -informationen vornimmt.

## Patentansprüche

1. Empfänger (1) für den Empfang von satellitengestützten Navigationssignalen, mit einer Empfangseinheit (3), mit einer mit der Empfangseinheit (3) verbundenen Rechnereinheit (9) zur Verarbeitung und Weiterleitung von Signalen und Daten für die Navigation und mit einer Schnittstelle (7) zur Verbindung des Empfängers (1) mit einem Navigationsrechner, **dadurch gekennzeichnet, dass** mindestens eine Schnittstelle (2) zum Einsetzen von Steckmodulen (4,5,6) unterschiedlicher Funktionen an der Rechnereinheit (9) angeschlossen ist.

2. Empfänger nach Anspruch 1, **dadurch gekennzeichnet, dass** ein Steckmodul (4,5,6) eine Funk- Sende/Empfangseinheit, vorzugsweise zur drahtlosen Verbindung mit dem Navigationsrechner, ist.

3. Empfänger nach einem der Ansprüche 1 oder 2, **dadurch gekennzeichnet, dass** die Schnittstelle (7) den Empfänger (1) mit dem Navigationsrechner über eine lösbare Kabelverbindung verbindet.

4. Empfänger nach einem der Ansprüche 1 bis 3, **dadurch gekennzeichnet, dass** ein Steckmodul (4,5,6) ein Verkehrsinformationsempfänger ist.

5. Empfänger nach einem der Ansprüche 1 bis 4, **dadurch gekennzeichnet, dass** ein Steckmodul (4,5,6) eine autarke Stromversorgungseinheit, vorzugsweise eine Batterie, aufweist.

6. Empfänger nach einem der Ansprüche 1 bis 5, **dadurch gekennzeichnet, dass** der Empfänger (1) einen Anschluss (8) an eine externe Stromversorgung aufweist.

7. Empfänger nach einem der Ansprüche 1 bis 6, **dadurch gekennzeichnet, dass** ein Steckmodul (4,5,6) einen Schallwandler, vorzugsweise zur Sprachwiedergabe, beinhaltet.

8. Empfänger nach einem der Ansprüche 1 bis 7, **dadurch gekennzeichnet, dass** ein Steckmodul (4,5,6) ein Display aufweist.

9. Empfänger nach einem der Ansprüche 1 bis 8, **dadurch gekennzeichnet, dass** die Schnittstellen (2) universelle Schnittstellen sind.

10. Navigationssystem mit einem Empfänger nach einem der Ansprüche 1 bis 9.
